# EUROPEAN PATENT SPECIFICATION

(11) **EP 0 347 571 B1**
(45) Date of publication and mention of the grant of the patent: **14.09.1994**
(21) Application number: 89108409.7
(22) Date of filing: 10.05.1989
(51) Int. Cl.: G01N 25/18

(54) **Method of determining the thermal conduction coefficient of a material, and instrument for the measurement of same**
Verfahren zur Bestimmung der thermischen Leitfähigkeit von Materialien und Vorrichtung zur Messung dazu
Méthode de détermination du coefficient de conduction thermique des matériaux et instrument de mesure à cet effet

(30) Priority: 20.05.1988 PL 272596
(43) Date of publication of application: 27.12.1989
(73) Proprietor: POLSKA AKADEMIA NAUK CENTRUM BADAN MOLEKULARNYCH I MAKROMOLEKULARNYCH, 90-363 Lodz (PL)
(72) Inventor: Piorkowska-Galeska, Ewa, PL-91-809 Lodz (PL); Galeski, Andrzej, PL-91-809 Lódz (PL)
(74) Representative: Finck, Dieter, Dr.Ing.

(56) References cited:
- EP-A- 0 124 104
- DE-A- 3 336 587
- US-A- 3 733 887
- US-A- 4 553 852
- JOURNAL OF APPLIED PHYSICS, vol. 60, no. 2, July 1986, NEW YORK, US, pp. 493-498 ; E, PIORKOWSKA AND GALESKI: "MEASUREMENTS OF THERMAL CONDUCTIVITY OF MATERIALS USING A TRANSIENT TECHNIQUE. II. DESCRIPTION OF THE APPARATUS."

## Description

The subject of the invention is a method of determining thermal conduction coefficient of materials and an instrument for measurement of thermal conduction coefficient of materials.

Thermal conduction coefficient of materials, λ, is defined by the equation:

$\frac{\text{dQ}}{\text{ds}} \text{= - λ grad T /1/}$

where: Q is a heat flux flowing in a time unit through a surface s, T is temperature. Spatial changes of the heat flux are described by the dependence:

$\text{div} \frac{\text{dQ}}{\text{ds}} \text{= - c} \frac{\text{δT}}{\text{δt}} \text{/2/}$

where: c is thermal capacity of the material per a unit of volume, t denotes time.
The combination of equations /1/ and /2/ gives the thermal conduction equation:

$\frac{\text{δT}}{\text{δt}} \text{=} \frac{\text{λ}}{\text{c}} \text{Δ T /3/}$

Methods of measurement of thermal conduction coefficient of materials comprise indirect and direct ones. Indirect methods consist in determination of thermal conduction coefficient, λ, or thermal diffusivity a, equal to the quotient of thermal conductivity, λ, by thermal capacity per a volume unit of the material, c,

$\text{/a = λ /c/, (4)}$

on the basis of measurement of temperature changes in time at one or several points of a sample. Here the distinguished methods are: the flash method/Parker, Jenkins, Butler, Abbot, J.Appl.Phys. 32, 1679 /1961/, Chen Poon, Choy, Polymer, 18,129 /1977// and the "hot wire" method /Sandberg, Andersson, Backstrom, J.Phys. E.Sci. Instr. 10, 474 /1977//. In all cases the obtained value of thermal conduction coefficient, λ, is attached to a definite temperature, in the vicinity of which the measurement was carried out.

Direct methods of measurement of thermal conduction coefficient consist in measurement of a heat flux flowing through a sample and the difference of temperatures between surfaces of the sample with the use of the dependence /1/. Those skilled in the art know many solutions of instruments for measurement of thermal conduction by the stationary method. From the US patent specification no. 3 733 887 an instrument is known, provided with a sample placed between a heat receiver and a heat source, which is connected with a respective temperature stabilization system. In all cases the known designs are based on the principle of determining thermal conduction coefficient by measurement of the heat flux flowing through a sample of the material at a controlled temperature difference or on measurement of the temperature difference inducing the flow of the known heat flux.
Measurements by means of the above mentioned methods are carried out at the determined temperature difference between surfaces of the sample. The measurement of thermal conduction coefficient is carried out within the temperature range determined by the difference between temperatures of surfaces of the sample. For the reason of the fact that the temperature difference is usually of the order of a few degrees, the temperature of the measurement is not precisely determined.

Those skilled in the art know a quasi-stationary method of measurement of thermal conduction coefficient/Eiermann, Hellwege, Knappe, Kolloid Z. 174, 134 /1961// consisting in the measurement of the sum of temperature differences between surfaces of two flat samples, resulting from thermal conduction to a colder plate placed between the said samples. Assuming that temperature gradients inside the samples are linear, thermal conduction coefficient, λ, is described by the formula: 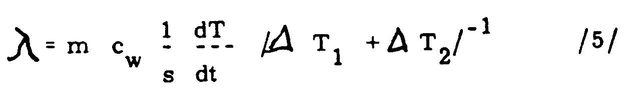
where: m is the mass of the plate between the samples, c_{w} is specific heat, 1 is the thickness of the sample, Δ T₁ and Δ T₂ are temperature differences between surfaces of the samples, 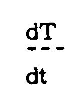
is the rate of the temperature change of the plate. A disadvantage of this method is the assumption of linearity and constancy of the temperature gradient inside the samples, what, in the case of a continuous change of the temperature of the plate receiving heat and of the samples, is not true.

Those skilled in the art know a method of measurement of thermal conduction coefficient and an instrument for measurement of thermal conduction coefficient according to the US patent no. 4 630 938 /Europ. Pat. no. 0 124 104/. The method presented in the US patent specification no. 4 630 938 enables determination of a continuous dependence of thermal conduction coefficient on the temperature. The known method consists in determination of instantaneous differences between temperatures of both surfaces of the material sample perpendicular to the direction of flow of the heat flux at the preset continuous temperature change of one of the surfaces of the said sample, preferably linearly changeable in time, and the measurement of supplied heat is carried out. The value of thermal conduction coefficient is determined on the basis of the dependence: 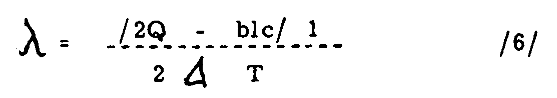
where:
- λ -: thermal conduction coefficient of the material being examined,
- Q -: heat flux flowing through the sample in a unit of time,
- Δ T -: instantaneous temperature difference between surfaces of the sample,
- c -: thermal capacity of the material being examined per a unit of volume,
- l -: thickness of the sample,
- b -: rate of the temperature change of one surface of the sample.

The instrumet for measurement of thermal conduction coefficient according to the US patent no. 4 630 938 is provided with a heater, preferably thinner than 1 mm, equipped with a thin layer temperature probe. The heater is placed between two samples of the material being tested, preferably not thicker than 10 mm. The said samples are in thermal contact with heat receivers incorporated in a system of linear temperature presetting in time.

A disadvantage of the known method is that in order to calculate thermal conduction coefficient of the material being tested λ and its dependence on temperature, it is necessary to know thermal capacity per a unit of volume c and its dependence on the temperature of the said material. To determine thermal conduction coefficient, when thermal capacity per a unit of volume c is unknown, one must carry out two continuous measurements at different values of heat fluxes Q₁ and Q₂ and determine thermal conduction coefficient from the system of two equations /6/.

The method according to the invention is defined in claim 1.

Since the temperature of the measurement system is being continuously changed, on the basis of the formula 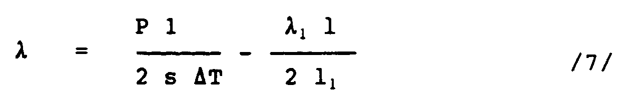
the continuous dependence of thermal conduction coefficient of the sample λ on the temperature is determined, and on the basis of the formula 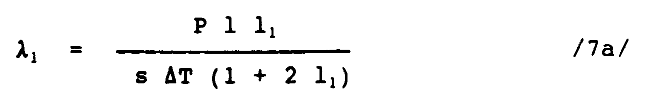
the continuous dependence of thermal conduction coefficient of standard samples λ ₁ on the temperature is determined.

Measurements are carried out with various preset rates of temperature changes of surfaces of both standard samples. The continuous temperature change of surfaces of both standard samples is preset directly on the surface of the said samples or through the intermediary of a good test conductor.

An instrument according to the invention is defined in claim 5.

The heater may be provided with a reheating ring. The heater, the temperature probe and the reheating ring are one element made by the thin-layer technology, of the thickness smaller than 200 µm. The first standard sample may be permanently connected with the heater, the temperature probe and the heat receiver. The second standard sample may be permanently connected with the temperature probe and the heat receiver.

The material sample and both standard samples are of equal thickness - less than 10 mm. Transverse dimensions of the material sample and of both standard samples are at least 10 times bigger from the thickness of the said samples.

An advantage of the method according to the invention in comparison to the known method is that thermal conduction coefficient of the material and its dependence on the temperature can be determined in the case when thermal capacity per a unit of volume and its dependence on the temperature of the said material is unknown, by means of only one continuous measurement.

Moreover, only one sample is used for the measurement, owing to what one avoids the measuring errors resulting from unavoidable differences between samples, what takes place when there must be more of them, as in the known method.

Besides, the method and the instrument according to the invention enable using of thin samples, what, in turn, enables measuring of thermal conductivity at small, about 1^{o}K, differences of temperatures between surfaces of the material sample. Owing to this the instantaneous temperature of the measurement is well determined.

Moreover, owing to the application of the material samples and standard samples of a big area in relation to their thickness the transverse temperature gradient is eliminated. Location of the sample of the material being tested on one side of the flat heater and the standard sample on the other side thereof eliminates convection and heat leakage beyond the instrument.

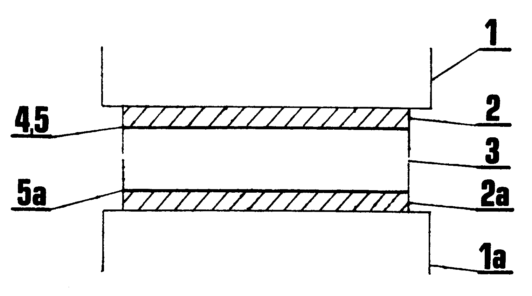

The invention will be explained in more detail on the basis of its embodiment basing on the drawing which shows the diagram of the instrument according to the invention.

The method of the continuous measurement of thermal conduction coefficient is based on the continuous measurement of the temperature difference between surfaces of the sample of the material being tested. The measurement is carried out in a symmetrical system, where between metal blocks two identical flat standard samples are placed, made of the material of known thermal conduction coefficient, separated by one flat sample of the material being tested. The heater and temperature probes are placed between the standard samples and the sample of the material being tested.

The temperature of heat receivers is being changed linearly in time. The temperature in the samples is the function of time and spatial variables and satisfies the differential equations: 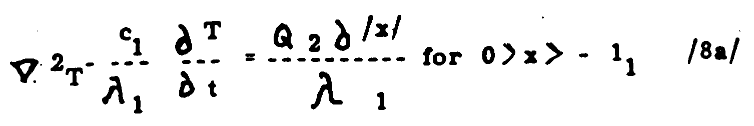 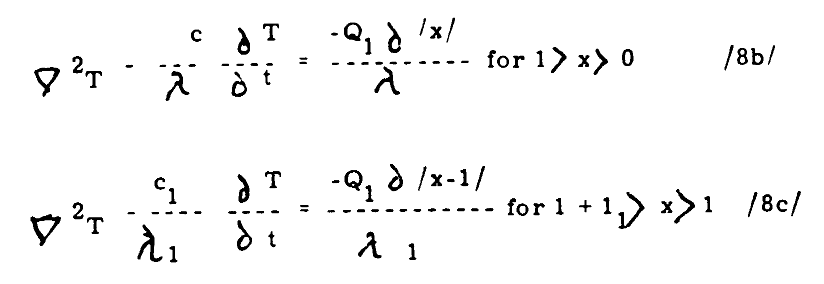
where: ∂ /x/ is the Dirac's function, c₁ and λ ₁ denote thermal capacity per a unit of volume and thermal conduction coefficient of the material of standard samples, c and λ denote thermal capacity per a unit of volume and thermal conduction coefficient of the sample of the material being tested, 1₁ denotes the thickness of the standard sample, 1 denotes the thickness of the material being tested, x denotes the space coordinate, T denotes temperature, t denotes time, Q₁ and Q₂ denote heat fluxes flowing into the samples, associated by the dependence:

$\text{Q₁ + Q₂ = P/s /9/}$

where: P denots power of the heater, s denotes the surface of the heater.
Initial conditions caused by emission of heat by the heater are, as follows:

$\text{T /x,0/ = f /x/ /10/}$

where: f /x/ is the function independent of time,

$\text{T /-1,0/ = 0 /11a/}$

${\text{T /0,0/ = T}}_{\text{o}} \text{/11b/}$

$\text{T /1,0/ = T₁ /11c/}$

$\text{T /1 + 1₁,0/ = 0 /11d/}$

Boundary conditions are the following:

$\text{T/-1₁,t/ = bt /12a/}$

$\text{T/1+1₁,t/ = bt /12b/}$

where: b denotes the constant rate of the temperature change at the edges of the system.
Equations /8 a-c/ can be solved by separation of variables:

$\text{T /x,t/ = u /x,t/ + w/x,t/ /13/}$

Function u/x,t/ satisfies differential equations of the form: 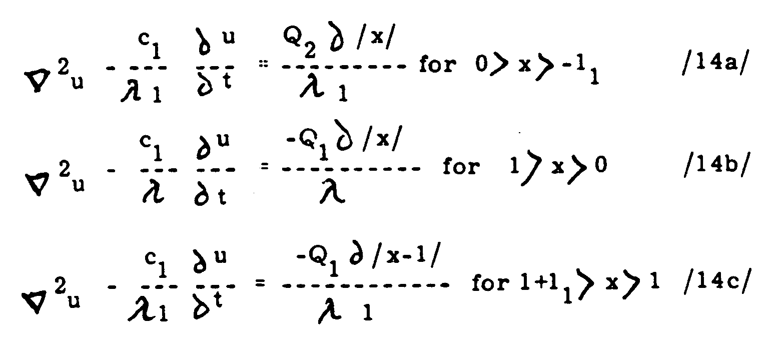
of initial and boundary conditions:

$\text{u/x,0/ = f/x/ for 1+1₁> x > -1₁ /15a/}$

$\text{u/-1₁,t/ = 0 /15b/}$

$\text{u/1+1₁,t/ = 0 /15c/}$

The function u/x,t/ can be represented ny means of the sum of functions:

$\text{u/x,t/ = u₁/x/ + u₂/x,t/ /16/}$

The function u₁/x/ satisfies the equations: 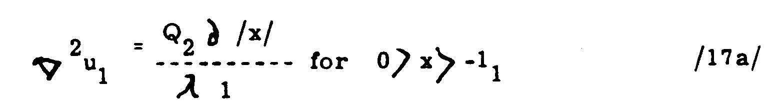 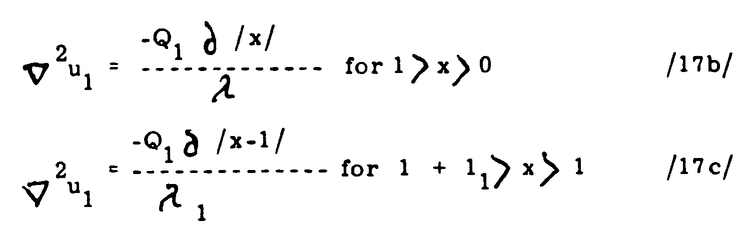
and boundary conditions:

$\text{u₁ /-1₁/ = 0 /18a/}$

${\text{u₁ / 0 / = T}}_{\text{o}} \text{/18b/}$

$\text{u₁ / 1 / = T₁ /18c/}$

$\text{u₁ /1+1₁/ = 0 /18d/}$

Solutions of equations /17 a-c/ are of the following forms: 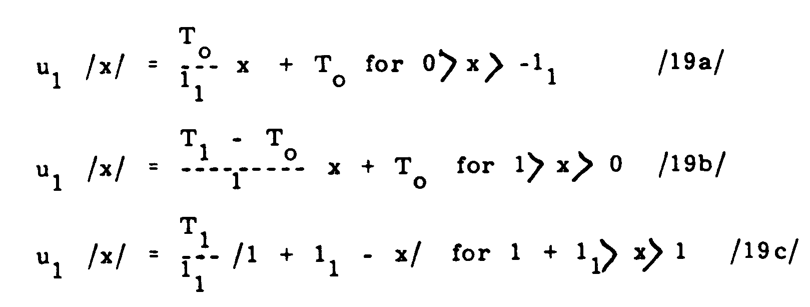
The function u₂ /x,t/ satisfies the equations: 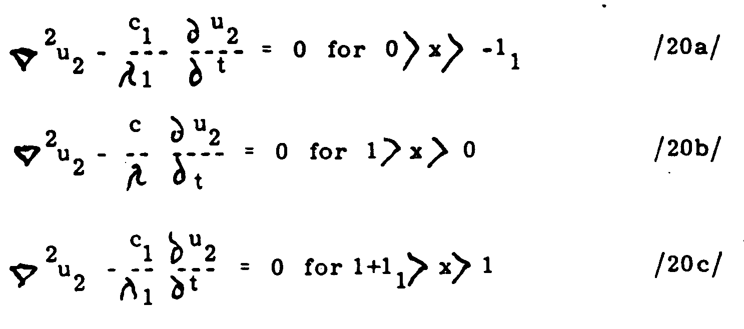
and conditions:

$\text{u₂ /- 1₁, t/ = 0 /21a/}$

$\text{u₂ /1+1₁, t/ = 0 /21b/}$

The function u₂/x/ is identially equal zero:

$\text{u₂ /x/ = 0 for 1+1₁ > x > -1, /22/}$

The function w/x,t/ is the solution of equations: 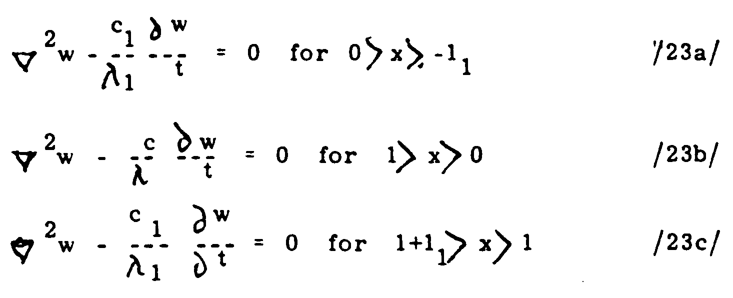
at boundary and initial conditions:

$\text{w /x, 0/ = 0 for 1+1₁ > x > -1₁ /24a/}$

$\text{w /-1₁, t/ = b t /24b/}$

$\text{w /1+1₁, t/ = b t /24c/}$

The function w/x,t/ can be determined by solving the equations /23a-23c/ at conditions /24a-24c/ by the Laplace transform method. The function w/x,t/ has the form: 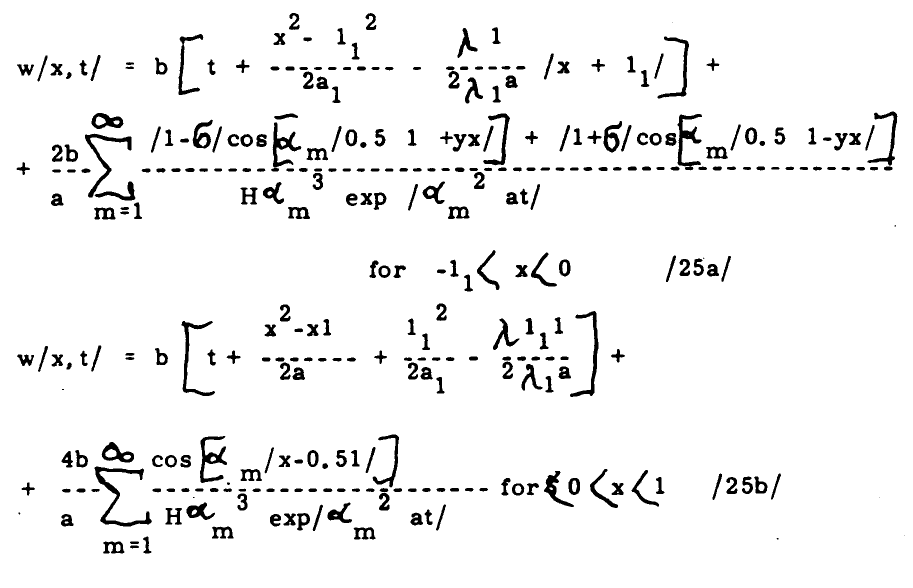 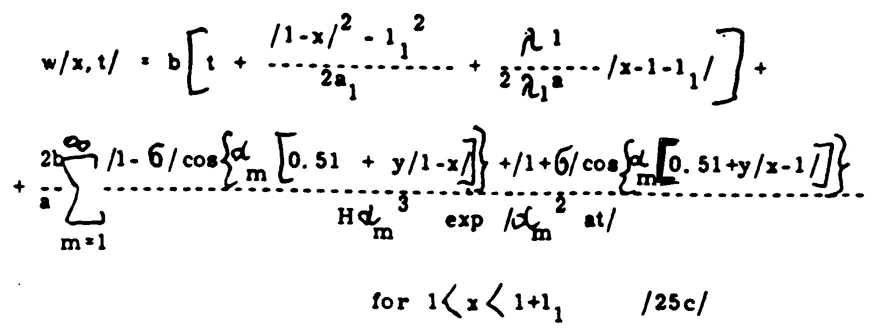
where:

${\text{H = /σ + 1/ /0.51 + y1₁/ sin[α}}_{\text{m}} {\text{/0.51 + y1₁/] + + /1 -σ/ /0.51 - y1₁/ sin[α}}_{\text{m}} \text{/0.51 - y1₁/] /26/}$

and αₘ, m=1,2... are solutions of the equation:

${\text{/δ +1/ cos[α}}_{\text{m}} {\text{/0.51 + y1₁/] + /1-δ/ cos[α}}_{\text{m}} \text{/0.51-y1₁/]= 0 /27/}$

where:

${\text{y=/a/a₁/}}^{\text{0.5}} \text{, δ = 2/ /y λ ₁/,}$

a and a₁ denote thermal diffusivities of the sample being tested and the standard samples determined by dependencies $\text{a = λ/c}$ , $\text{a₁ = λ₁/c₁}$ .
From equations /25a - 25c/ the following dependence results: 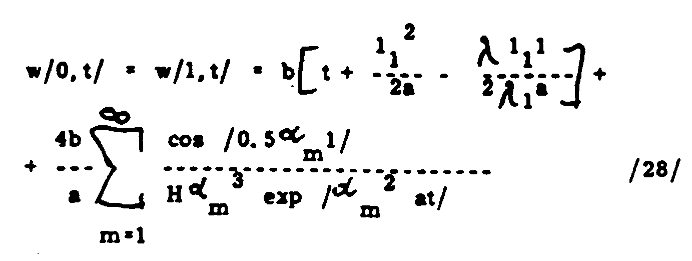
The function w/x,t/ describes this part of the temperature distribution in the samples, which is causedonly by the linear temperature change at the edges of the system and not by the flow of heat supplied by the heater.

Finally, the temperature distribution in the sample of the material being tested can be presented: 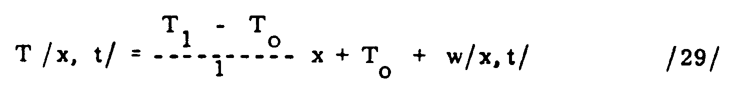
The temperature difference between surfaces of the sample of the material being tested is: 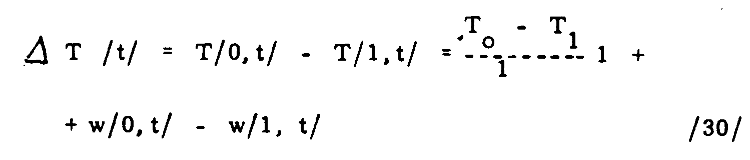
${\text{Δ T /t/ = T}}_{\text{o}} \text{- T₁ /31/}$

On the basis of equations /17/ and /19/ the following dependencies can be deduced: 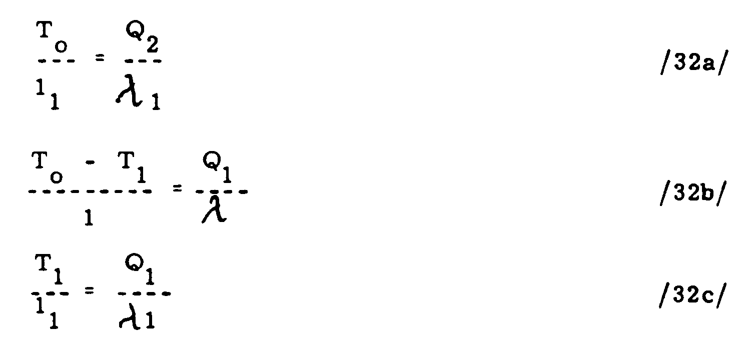
From equations /28/ and /29/ the dependence results: 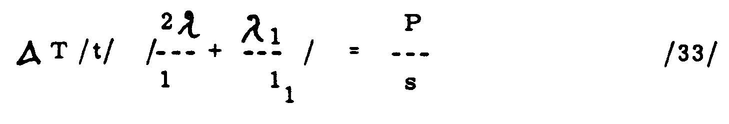
From the equation /33/ the dependence for thermal conduction coefficient of the material being tested, λ, can be deduced: 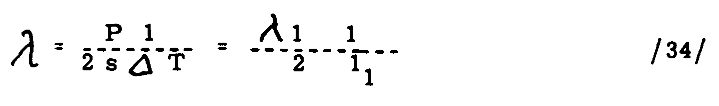
In the formula neither thermal capacity of the material being tested nor the temperature change rate appears. To carry out the measurement of thermal conduction coefficient of the material being tested in the function of the temperature it is sufficient to carry out one continuous measurement of the temperature difference Δ T within the required temperature range.
When the sample being tested is made of the same material as the standard samples $\text{/λ = λ₁/}$ the dependence /34/ assumes the form: 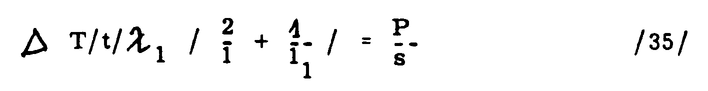
On the basis of the dependence /35/ thermal conduction coefficient of the material of the standard samples λ₁ can be determined: 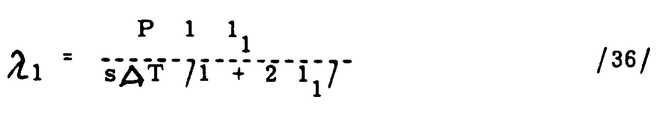
From formulae /35/ and /36/ it results that the dependence of thermal conduction coefficient of the material of standard samples on the temperature can be determined by the measurement for the sample being tested, made of the same material as the standard samples.

The instrument according to the invention is shown in the drawing in an example of its embodiment. The instrument comprises two heat receivers, which are two metal blocks 1, 1a of dimensions 25 x 35 x 5 mm, incorporated in a control system of the temperature changed linearly in time. In blocks 1, 1a platinic resistance thermometers are placed, designed to measure the instantaneous temperature of the said blocks. Resistance thermometers function at the same time as probes for control of heating or cooling of blocks 1, 1a with flowing gas. Blocks 1, 1a are in a thermal contact with the first standard sample 2 and the second standard sample 2a of known thermal conduction coefficient. Between standard samples 2, 2a a sample of the material being tested 3 is placed. Between the first standard sample 2 and the sample of the material being tested 3 there is a heater 4 placed, provided with a reheating ring and a temperature probe 5. The heater 4 with the reheating ring and the probe 5 are one element made by the thin-layer technology and as a whole are less than 200 µm thick. Between the second standard sample 2a and the sample of the material being tested 3 a thin-layer temperature probe 5a is placed. The thickness of the heater 4 and temperature probes 5, 5a is insignificant in comparison with the thickness of all the samples 3, 2, 2a.

The sample of the material being tested 3 is in a thermal contact with the heater 4 and the temperature probe 5a, the standard sample 2 being in a thermal contact with the heater 4 and the heat receiver 1, and the standard sample 2a being in a thermal contact with the temperature probe 5a and the heat receiver 1a. All samples 3, 2, 2a are of equal thickness - less than 10 mm. Transverse dimensions of all samples 3, 2, 2a are 10 times bigger that the thickness of the said samples.

The first standard sample 2 is connected permanently with the heater 4, the temperature probe 5 and the heat receiver 1. The second standard sample 2a is connected permanently with the temperature probe 5a and the heat receiver 1a.

The tested sample 3 and the standard samples 2 and 2a can be made of the same material.

By means of the instrument according to the invention thermal conduction coefficient of standard samples 2, 2a is also determined.

In this case the sample of the material being tested 3 is made of the same material as the standard samples 2, 2a.

## Claims

1. Method of determining the continuous temperature dependence of the thermal conductivity coefficient λ of a material sample (3) having a known thickness l, the one surface of which material sample (3) is in thermal contact with a heater (4) having a known surfaces and emitting an amount of heat P in a unit of time, which heater (4) is further in thermal contact with a first standard sample (2) having a thermal conductivity coefficient λ₁ and a known thickness l₁, which first standard sample (2) is in thermal contact with a first heat receiver (1), while the opposite surface of the material sample (3) is in thermal contact with a second standard sample (2a) which is identical to the first standard sample (2) and which is in thermal contact with a second heat receiver (1a), wherein the amount of heat P emitted by the heater (4) in a unit of time is measured during an identical, preferably linearly applied continuous change of the temperature of the heat receivers (1, 1a), while the difference ΔT of the instantaneous temperatures of the opposite surfaces of the material sample (3) is measured (5, 5a) and the respective thermal conductivity coefficient λ or λ₁ is determined by means of the formula 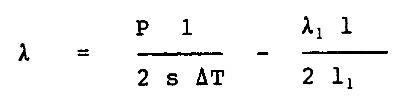 if the materials of the material sample (3) and the standard samples (2, 2a) are different and the thermal conductivity coefficient λ₁ of the standard samples (2, 2a) is known
or by means of the formula 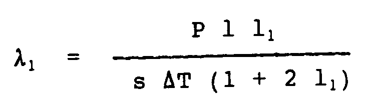 if the standard samples and the material sample (3) are made of the same material.

2. Method according to claim 1, **characterised** in that the measurements are carried out at different preset rates of temperature change of the heat receivers (1, 1a).

3. Method according to claim 1 or 2, **characterised** in that the presetting of the continuous temperature change of both heat receivers (1, 1a) is achieved by means of a flowing gas or a liquid stream.

4. Method according to claim 1 or 2, **characterised** in that solid bodies of a material having a high thermal conductivity are used as heat receivers (1, 1a).

5. Device for determining the continuous temperature dependence of the thermal conductivity coefficient λ of a material sample (3) having a known thickness l, the one surface of which material sample (3) is in thermal contact with a heater (4) having a known surfaces and emitting an amount of heat P in a unit of time, which heater (4) is further in thermal contact with a first standard sample (2) having a thermal conductivity coefficient λ₁ and a known thickness l₁, which first standard sample (2) is in thermal contact with the first heat receiver (1), while the opposite surface of the material sample (3) is in thermal contact with a second standard sample (2a) which is identical to the first standard sample (2) and which is in thermal contact with a second heat receiver (1a), which device further comprises
- a first thin-layer temperature probe (5) for measu ring the temperature of one surface of the material sample (3) together with the heater (4) in a thin-layer structure, both placed between the material sample (3) and the first standard sample (2),
- a second thin-layer temperature probe (5a) for measuring the temperature of the opposite surface of the material sample (3), which second thin-layer temperature probe (5a) is placed between the material sample (3) and the second standard sample (2a),
- means for controlling the preset, preferably linear change of the identical temperatures of the two heat-receivers (1, 1a), which temperatures are measured by two additional temperature probes,
whereby the device is configured such that the thermal conductivity coefficient λ or λ₁ can be determined according to the formula 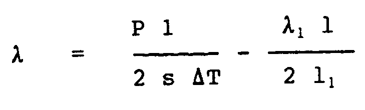 if the material of the material sample (3) and the standard samples (2, 2a) is different and the thermal conductivity coefficient λ₁ of the standard samples (2, 2a) is known
or by means of the formula 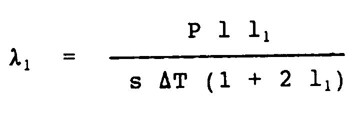 if the standard samples and the material sample (3) are made of the same material.

6. Device according to claim (5), wherein the heater (4) is provided with a reheating ring.

7. Device according to claim 6, **characterised** in that the heater (4), the temperature probe (5) and the reheating ring are one element made by thin-layer technology and are less than 200 µm thick.

8. Device according to one of the claims 5 to 7, wherein the first standard sample (2) is permanently connected with the heater (4), the temperature probe (5) and the heat-receiver (1).

9. Device according to one of the claims 5 to 8, wherein the second standard sample (2a) is permanently connected with the temperature probe (5a) and the heat-receiver (1a).

10. Device according to one of the claims 5 to 9, wherein the material sample (3) and both standard samples (2, 2a) are of equal thickness - less than 10 mm.

11. Device according to one of the claims 5 to 10, wherein the transverse dimensions of the material sample (3) and of the standard samples (2, 2a) are at least ten times bigger than the thickness of these samples (3, 2, 2a).

## Patentansprüche

1. Verfahren zur Bestimmung der kontinuierlichen Temperaturabhängigkeit der Wärmeleitzahl λ einer Materialprobe (3) mit einer bekannten Dicke l, wobei die eine Fläche der Materialprobe (3) in thermischem Kontakt mit einer Heizeinrichtung (4) steht, die eine bekannte Fläche s hat und in einer Zeiteinheit eine Wärmemenge P abgibt, die Heizeinrichtung (4) darüber hinaus in thermischem Kontakt mit einer ersten Standardprobe (2) steht, die eine Wärmeleitzahl λ₁ und eine bekannte Dicke l₁ hat, und die in thermischem Kontakt mit einem ersten Wärmeabnehmer (1) steht, während die gegenüberliegende Fläche der Materialprobe (3) in thermischen Kontakt mit einer zweiten Standardporbe (2a) steht, die zur ersten Standardprobe (2) identisch ist und in thermischem Kontakt mit einem zweiten Wärmebnehmer (1a) steht, wobei die in einer Zeiteinheit von der Heizeinrichtung (4) abgegebene Wärmemenge P während einer identischen, vorzugsweise linear durchgeführten kontinuierlichen Temperaturänderung der Wärmeabnehmer (1, 1a) gemessen wird, während die Differenz ΔT der momentanen Temperaturen der gegenüberliegenden Flächen der Materialprobe (3) gemessen (5, 5a) wird und die jeweilige Wärmeleitzahl λ oder λ₁ nach der Formel 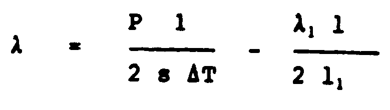 wenn das Material der Materialprobe (3) und der Standardproben (2, 2a) unterschiedlich ist und die Wärmeleitzahl λ₁ der Standardproben (2, 2a) bekannt ist,
oder nach der Formel 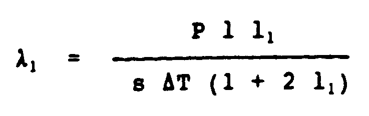 bestimmt wird, wenn die Standardproben und die Materialprobe (3) aus dem gleichen Material bestehen.

2. Verfahren nach Anspruch 1, dadurch gekennzeichnet, daß die Messungen bei unterschiedlichen vorgegebenen Temperaturänderungswerten der Wärmeabnehmer (1, 1a) durchgeführt werden.

3. Verfahren nach Anspruch 1 oder 2, dadurch gekennzeichnet, daß die Vorgabe der kontinuierlichen Temperaturänderung der beiden Wärmeabnehmer (1, 1a) mit Hilfe eines strömenden Gases oder eines Flüssigkeitsstroms erreicht wird.

4. Verfahren nach Anspruch 1 oder 2, dadurch gekennzeichnet, daß als Wärmeabnehmer (1, 1a) feste Körper eines Materials verwendet werden, das eine hohe Wärmeleitfähigkeit hat.

5. Vorrichtung zur Bestimmung der kontinuierlichen Temperaturabhängigkeit der Wärmeleitzahl λ einer Materialprobe (3) mit einer bekannten Dicke l, wobei die eine Fläche der Materialprobe (3) in thermischem Kontakt mit einer Heizeinrichtung (4) steht, die eine bekannte Fläche s hat und in einer Zeiteinheit eine Wärmemenge P abgibt, und die darüber hinaus in thermischem Kontakt mit einer ersten Standardprobe (2) steht, die eine Wärmeleitzahl λ₁ und einer bekannten Dicke l₁ hat, sowie in thermischem Kontakt mit dem ersten Wärmeabnehmer (1) steht, während die gegenüberliegende Fläche der Materialprobe (3) in thermischen Kontakt mit einer zweiten Standardporbe (2a) steht, die zur ersten Standardprobe (2) identisch ist und die in thermischem Kontakt mit einem zweiten Wärmeabnehmer (1a) steht, wobei die Vorrichtung darüber hinaus
- einen ersten Dünnschicht-Temperaturfühler (5) zur Messung der Temperatur der einen Fläche der Materialprobe (3) zusammen mit der Heizeinrichtung (4) in einer Dünnschicht-Struktur, die beide zwischen der Materialprobe (3) und der ersten Standardprobe (2) angeordnet sind,
- einen zweiten Dünnschicht-Temperaturfühler (5a) zur Messung der Temperatur einer gegenüberliegenden Fläche der Materialprobe (3), wobei der zweite Dünnschicht-Temperaturfühler (5a) zwischen der Materialprobe (3) und der zweiten Standardprobe (2a) angeordnet ist, und
- Einrichtungen zur Steuerung der vorgegebenen, vorzugsweise linearen Änderung der identischen Temperaturen der beiden Wärmeabnehmer (1, 1a) aufweisen, die von zwei zusätzlichen Termperaturfühlern gemessen werden, wobei die Vorrichtung so gestaltet ist, daß die Wärmeleitzahl λ oder λ₁ nach der Formel 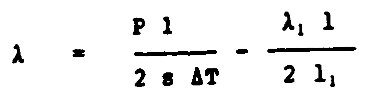 wenn das Material der Materialprobe (3) und der Standardproben (2, 2a) unterschiedlich ist und die Wärmeleitzahl λ₁ der Standardproben (2, 2a) bekannt ist,
oder nach der Formel 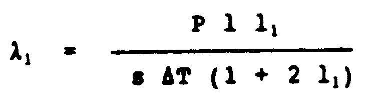 bestimmt werden kann, wenn die Standardproben und die Materialprobe (3) aus dem gleichen Material bestehen.

6. Vorrichtung nach Anspruch 5, bei der die Heizeinrichtung (4) mit einem wiederaufheizbaren Ring versehen ist.

7. Vorrichtung nach Anspruch 6, dadurch gekennzeichnet, daß die Heizeinrichtung (4), der Temperaturfühler (5) und der wiederaufheizbare Ring ein im Dünnschichtverfahren hergestelltes Element bilden und weniger als 200 µm dick sind.

8. Vorrichtung nach einem der Ansprüche 5 bis 7, bei der die erste Standardprobe (2) permanent mit der Heizeinrichtung (4), dem Temperaturfühler (5) und dem Wärmeabnehmer (1) verbunden ist.

9. Vorrichtung nach einem der Ansprüche 5 bis 8, bei der die zweite Standardprobe (2a) permanent mit dem Temperaturfühler (5a) und dem Wärmeabnehmer (1a) verbunden ist.

10. Vorrichtung nach einem der Ansprüche 5 bis 9, bei der die Materialprobe (3) und beide Standardproben (2, 2a) die gleiche Dicke von weniger als 10 mm haben.

11. Vorrichtung nach einem der Ansprüche 5 bis 10, bei der die transversalen Abmessungen der Materialprobe (3) und der Standardproben (2, 2a) um wenigstens das Zehnfache größer als die Dicke dieser Proben (3, 2, 2a) sind.

## Revendications

1. Méthode de détermination de la dépendance en continu de la température du coefficient de conductivité thermique λ d'un échantillon de matériau (3) ayant une épaisseur l connue, échantillon de matériau (3) dont l'une des surfaces est en contact thermique avec un élément chauffant (4) présentant une surface s connue et émettant une quantité de chaleur P en un temps unitaire, élément chauffant (4) qui est, par ailleurs, en contact thermique avec un premier échantillon standard (2) ayant un coefficient de conductivité thermique λ₁ et une épaisseur l₁ connue, premier échantillon standard (2) qui est en contact thermique avec le premier récepteur de chaleur (1), tandis que la surface opposée de l'échantillon de matériau (3) est en contact thermique avec un second échantillon standard (2a) qui est identique au premier échantillon standard (2) et qui est en contact thermique avec un second récepteur de chaleur (1a), dans laquelle la quantité de chaleur P émise par l'élément chauffant (4) en une unité de temps est mesurée pendant un changement continu identique, de préférence appliqué de manière linéaire, de la température des récepteurs de chaleur (1, 1a), tandis que la différence ΔT entre les températures momentanées des surfaces opposées de l'échantillon de matériau (3) est mesurée (5, 5a) et le coefficient de conductivité thermique respectif λ ou λ₁ est déterminé à l'aide de la formule 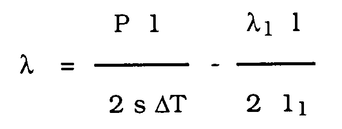 si les matériaux de l'échantillon de matériau (3) et des échantillons standards (2, 2a) sont différents et que le coefficient de conductivité thermique λ₁ des échnatillons standards (2, 2a) est connu,
ou à l'aide de la formule 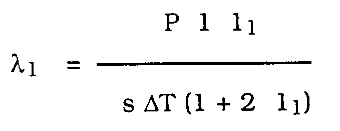 si les échantillons standards et l'échantillon de matériau (3) sont réalisés dans le même matériau.

2. Méthode suivant la revendication 1, caractérisée en ce que les mesures sont effectuées à différents taux de changement de température préétablis des récepteurs de chaleur (1, 1a).

3. Méthode suivant la revendication 1 ou 2, caractérisée en ce que le préétablissement du changement de température continu des deux récepteurs de chaleur (1, 1a) est réalisé à l'aide d'un gaz circulant ou d'un courant de liquide.

4. Méthode suivant la revendication 1 ou 2, caractérisée en ce que des corps solides en un matériau ayant une conductivité thermique élevée sont utilisés comme récepteurs de chaleur (1, 1a).

5. Dispositif pour déterminer la dépendance en continu de la température du coefficient de conductivité thermique λ d'un échantillon de matériau (3) ayant une épaisseur l connue, échantillon de matériau (3) dont l'une des surfaces est en contact thermique avec un élément chauffant (4) présentant une surface s connue et émettant une quantité de chaleur P en un temps unitaire, élément chauffant (4) qui est, par ailleurs, en contact thermique avec un premier échantillon standard (2) ayant un coefficient de conductivité thermique λ₁ et une épaisseur l₁ connue, premier échantillon standard (2) qui est en contact thermique avec le premier récepteur de chaleur (1), tandis que la surface opposée de l'échantillon de matériau (3) est en contact thermique avec un second échantillon standard (2a) qui est identique au premier échantillon standard (2) et qui est en contact thermique avec un second récepteur de chaleur (1a), dispositif qui comprend, en outre
- une première sonde de température (5) en forme de mince couche, destinée à mesurer la température de l'une des surfaces de l'échantillon de matériau (3), ensemble avec l'élément chauffant (4) en forme de structure de mince couche, tous deux placés entre l'échantillon de matériau (3) et le premier échantillon standard (2),
- une seconde sonde de température (5a) en forme de mince couche, destinée à mesurer la température de la surface opposée de l'échantillon de matériau (3), seconde sonde de température (5a) en forme de mince couche qui est placée entre l'échantillon de matériau (3) et le second échantillon standard (2a),
- un moyen pour commander le changement préétabli, de préférence linéaire, des températures identiques des deux récepteurs de chaleur (1, 1a), températures qui sont mesurées par deux sondes de température supplémentaires, le dispositif étant configuré de telle manière que le coefficient de conductivité thermique λ ou λ₁ peut être déterminé suivant la formule 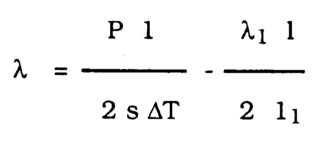 si le matériau de l'échantillon de matériau (3) et des échantillons standards (2, 2a) est différent et que le coefficient de conductivité thermique λ₁ des échantillons standards (2, 2a) est connu,
ou à l'aide de la formule 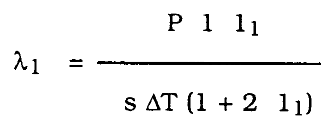 si les échantillons standards et l'échantillon de matériau (3) sont réalisés dans le même matériau.

6. Dispositif suivant la revendication 5, dans lequel l'élément chauffant (4) est pourvu d'une bague de réchauffement.

7. Dispositif suivant la revendication 6, caractérisé en ce que l'élément chauffant (4), la sonde de température (5) et la bague de réchauffement sont un seul élément réalisé par la technologie des minces couches et sont d'une épaisseur inférieure à 200 µm.

8. Dispositif suivant les revendications 5 à 7, dans lequel le premier échantillon standard (2) est en permanence relié à l'élément chauffant (4), à la sonde de température (5) et au récepteur de chaleur (1).

9. Dispositif suivant l'une des revendications 5 à 8, dans lequel le second échantillon standard (2a) est en permanence relié à la sonde de température (5a) et au récepteur de chaleur (1a).

10. Dispositif suivant l'une des revendications 5 à 9, dans lequel l'échantillon de matériau (3) et les deux échantillons standards (2, 2a) sont de même épaisseur - inférieure à 10 mm.

11. Dispositif suivant l'une des revendications 5 à 10, dans lequel les dimensions transversales de l'échantillon de matériau (3) et des deux échantillons standards (2, 2a) sont au moins dix fois supérieures à l'épaisseur de ces échantillons (3, 2, 2a).
